# EUROPEAN PATENT APPLICATION

(11) **EP 4 834 600 A1**
(43) Date of publication of application: **04.11.2026**
(21) Application number: 26172756.4
(22) Date of filing: 16.04.2026
(51) Int. Cl.: B60C 1/00, C08L 9/00, C08L 9/06

(54) **RUBBER COMPOSITIONS AND ARTICLES THEREOF**

(30) Priority: 28.04.2025 US 202519190979
(71) Applicant: The Goodyear Tire & Rubber Company, Akron, OH 44316 (US)
(72) Inventor: JACOBY, Claude Charles, L-6615 Wasserbillig (LU); POMPEI, Manuela, 9768 Reuler (LU); JOLY, Laurence Isabelle, L-7750 Colmar-Berg (LU); DIER, Tobias Karl-Fridolin, L-7750 Colmar-Berg (LU)
(74) Representative: Leslie, Edward

(57) **Abstract**

A vulcanizable composition id disclosed comprising a polydiene in the amount of from 75 phr to 100 phr, wherein the polydiene comprises one or more elastomers, and wherein at least one elastomer has a glass transition temperature of from -95°C to -75°C as determined in accordance with ASTM D3418-21; at least 5 phr of a coupling agent comprising a blocked mercapto silane; and at least 30 phr of a resin, where the resin comprises an ester of a resin acid and a polyhydric alcohol. Also disclosed are articles comprising these compositions, such as tires or components of tires, as a vulcanized composition.

## Description

### BACKGROUND

The demand for improved tire performance has resulted in the evaluation of materials that have desirable properties. Improving tire properties while maintaining the balance in trade-offs can be challenging. For example, for all-season tires and winter tires, desirable properties include good wet traction performance, low rolling resistance, and snow and/or ice performance. However, keeping one property, e.g., snow performance, at a good level without sacrificing another property, e.g., wet traction performance, has traditionally been very difficult. Despite improvements in rubber formulations for tires such as all-season tires and winter tires, there is a need for rubber formulations that maintain a balance in performance for desirable properties such as wet traction, rolling resistance, and snow and/or ice performance. These needs and other needs are satisfied by the present invention.

### SUMMARY OF THE INVENTION

The invention relates to a rubber composition in accordance with claim 1, to a vulcanized composition in accordance with claim 14 and to an article in accordance with claim 15.

Dependent claims refer to preferred embodiments of the invention.

The invention, in one aspect, relates to compositions comprising: a polydiene in the amount of 75 phr to 100 phr, wherein the polydiene comprises one or more elastomers, and wherein at least one elastomer has a glass transition temperature of from -95°C to -75°C; at least 5 phr of a coupling agent comprising a blocked mercapto silane; and at least 30 phr of a resin, where the resin comprises an ester of resin acid and a polyhydric alcohol. The invention also relates to articles comprising the disclosed compositions, such as tires or components of tires.

### DETAILED DESCRIPTION OF PREFERRED EMBODIMENTS OF THE INVENTION

Although specific terms are employed herein, they are used in a generic and descriptive sense only and not for purposes of limitation. It is also to be understood that the terminology used herein is for the purpose of describing particular embodiments only and is not intended to be limiting. Unless defined otherwise, all technical and scientific terms used herein have the same meaning as commonly understood by one of ordinary skill in the art to which the disclosed compositions and methods belong. It will be further understood that terms, such as those defined in commonly used dictionaries, should be interpreted as having a meaning that is consistent with their meaning in the context of the specification and relevant art and should not be interpreted in an idealized or overly formal sense unless expressly defined herein.

Prior to describing the various embodiments of the present invention, the following definitions are provided and should be used unless otherwise indicated. Additional terms may be defined elsewhere in the present invention.

### A. DEFINITIONS

As used herein, "comprising" is to be interpreted as specifying the presence of the stated features, integers, steps, or components as referred to, but does not preclude the presence or addition of one or more features, integers, steps, or components, or groups thereof. Further, the term "comprising" is intended to include examples and embodiments encompassed by the terms "consisting essentially of" and "consisting of." Similarly, the term "consisting essentially of" is intended to include examples encompassed by the term "consisting of.

As used herein, nomenclature for compounds, including organic compounds, can be given using common names, IUPAC, IUBMB, or CAS recommendations for nomenclature. When one or more stereochemical features are present, Cahn-Ingold-Prelog rules for stereochemistry can be employed to designate stereochemical priority, E/Z specification, and the like. One of skill in the art can readily ascertain the structure of a compound if given a name, either by systemic reduction of the compound structure using naming conventions, or by commercially available software, such as CHEMDRAW^{™} (Cambridgesoft Corporation, U.S.A.).

As used in the specification and the appended claims, the singular forms "a," "an" and "the" include plural referents unless the context clearly dictates otherwise. Thus, for example, reference to "an elastomer," "an accelerator," or "a wax," includes, but is not limited to, two or more such elastomers, accelerators, or waxes, and the like. Reference to "a" chemical compound refers to one or more molecules of the chemical compound rather than being limited to a single molecule of the chemical compound. Furthermore, the one or more molecules may or may not be identical, so long as they fall under the category of the chemical compound. Thus, for example, "a" chemical compound is interpreted to include one or more molecules of the chemical compound, where the molecules may or may not be identical (e.g., different isotopic ratios, enantiomers, and the like).

It should be noted that ratios, concentrations, amounts, and other numerical data can be expressed herein in a range format. **It** will be further understood that the endpoints of each of the ranges are significant both in relation to the other endpoint, and independently of the other endpoint.

The terms "rubber" and "elastomer" may be used herein interchangeably, unless indicated otherwise.

As used herein, the term "phr" refers to parts by weight of a respective material per 100 parts by weight of rubber or elastomer. In general, using this convention, an elastomer composition is comprised of 100 parts by weight of rubber/elastomer. The claimed composition may comprise other rubbers/elastomers than explicitly mentioned in the claims, provided that the phr value of the claimed rubbers/elastomers is in accordance with claimed phr ranges and the amount of all rubbers/elastomers in the composition results in total in 100 parts of rubber/elastomer.

As used herein, the term "uncured composition" refers to a composition including at least one natural or synthetic rubber component and, optionally, one or more fillers, processing aids, or additional compounds, that has not been vulcanized. Uncured rubber is sensitive to changes in temperature and has a tendency to undergo "cold flow" (slow movement or deformation under stress) over time. In one aspect, the uncured rubber composition is a masterbatch.

As used herein, the term "vulcanized rubber composition" refers to a rubber composition obtained by taking an uncured composition as described herein and curing or vulcanizing it, often accomplished using sulfur compounds and/or other curing additives and in the presence of heat. Vulcanized or cured rubber does not undergo cold flow and is less sensitive to changes in temperature relative to uncured rubber. In one aspect, rubber compositions can be cured in molds in order to form finished articles such as tires.

As used herein, the term "repeat unit" as referenced in the elastomers described herein are derived from monomers used to produce the partially saturated elastomers. For example, polybutadiene has the repeat unit as provided below.

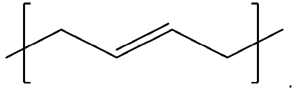

In certain embodiments, when the elastomer is the polymerization product of two different monomers (e.g., A and B), the repeat unit can be represented by -A-B-.

As used herein, a "residue" of a chemical species refers to the moiety that is the resulting product of the chemical species in a particular reaction scheme or subsequent formulation or chemical product, regardless of whether the moiety is actually obtained from the chemical species. Thus, an isoprene residue in an elastomer refers to one or more - CH₂CH=C(CH₃)CH₂- units in the elastomer, regardless of whether isoprene was used to prepare the elastomer. Similarly, a butadiene residue in an elastomer refers to one or more - CH₂CH=CHCH₂- moieties in the elastomer, regardless of whether the residue is obtained by reacting sebacic acid or an ester thereof to obtain the polyester.

The term "tread," refers to both the region of a tire that comes into contact with the road under normal inflation and load as well as any subtread.

The glass transition temperature (T_{g}) of an elastomer or elastomer composition is the glass transition temperature(s) of the respective elastomer or elastomer composition in its uncured state or possibly a cured state in a case of an elastomer composition. T_{g} values of elastomers are determined as a peak midpoint by a differential scanning calorimeter (DSC) at a temperature rate of increase of 10°C per minute, in accordance with ASTM D3418-21.

The T_{g} for a resin is determined as a peak midpoint by a DSC at a temperature rate of increase of 10°C per minute, in accordance with ASTM D6604-00 (2017).

The T_{g} for an oil is determined as a peak midpoint by a DSC at a temperature rate of increase of 10°C per minute, in accordance with ASTM E1356-08 (2014).

Unless otherwise specified, temperatures referred to herein are based on atmospheric pressure (i.e. one atmosphere).

### B. RUBBER COMPOSITIONS

In one aspect, the invention relates to compositions, such as vulcanizable rubber compositions and cured vulcanizable rubber compositions, comprising a polydiene in the amount of 75 phr to 100 phr, at least 5 phr of a coupling agent comprising a blocked mercapto silane; and at least 30 phr of a resin. In a further aspect, the polydiene can comprise one or more elastomers, wherein at least one elastomer has a glass transition temperature of from -95°C to -75°C. In another further aspect, the resin can comprise an ester of a resin acid and a polyhydric alcohol. In one aspect, the invention relates to articles, such as tires and/or components of tires, comprising the compositions and/or cured forms of the compositions. In another aspect, tires comprising the disclosed compositions can exhibit a good balance between wet traction performance, snow performance (e.g., traction on snowy and/or icy surfaces), and rolling resistance. The rubber compositions are not limited to use in tires but can also find application in other articles such as rubber gloves, surgical instruments, and the like.

In a further aspect, the composition can comprise from 75 phr, 80 phr, 85 phr, 90 phr, 95 phr, or 100 phr of the polydiene, where any value can be a lower and upper endpoint of a range (e.g., 80 phr to 100 phr). In another aspect, at least one elastomer of the polydiene can have a glass transition temperature of -95°C, -90°C, -85°C, -80°C, or -75°C, where any value can be a lower and upper endpoint of a range (e.g., -90°C to -80°C). In another aspect, the polydiene can comprise polybutadiene rubber, a solution polymerized styrene-butadiene rubber (SSBR), or a combination thereof. Any of the elastomers included in the polydiene can individually have a number average molecular weight (Mₙ) between 100,000 Da and 500,000 Da. Mₙ may be determined by methods known in the art, such as by gel permeation chromatography following ASTM D3536 or an equivalent.

In another aspect, at least one elastomer can be functionalized with at least one functional group. The functional groups can be appended to the polymer chain at a terminus or within the elastomer chain. Functional groups can be incorporated into the elastomer during polymerization (e.g., as a functional polymerization initiator or functional polymerization terminator for terminal appendage) or as a functional moiety for in-chain insertion. In one aspect, at least one elastomer (e.g., a solution polymerized styrene-butadiene rubber) can be functionalized with at least one functional group selected from an aminosilane group, a thiol, a hydroxy, an ethoxy group, an epoxy group, an amino group, a carboxyl group, a phthalocyanine group, and a silane-sulfide group. Examples of aminosilane groups include, but are not limited to, mono-; bis-; tris-; or tetra- (alkylamino) alkenylmethylsilanes; (alkenylamino) alkenylmethylsilanes; (alkylamino) halomethylsilanes; (alkenylamino) halomethylsilanes; (arylamino) alkenylmethylsilanes; and (arylamino) halomethylsilanes. In another aspect, at least one elastomer (e.g., a polybutadiene rubber) can be functionalized with at least one functional group selected from hydroxy, thiol, an amino group, an alkoxy group, an alkoxyamine group, a silane, an alkoxysilane, and an alkoxyaminosilane.

In one aspect, the polydiene can comprise a solution polymerized styrene-butadiene rubber having from 2 wt%, 4 wt%, 6 wt%, 8 wt%, or 10 wt% residues of styrene, where any value can be a lower and upper endpoint of a range (e.g., 2 wt% to 10 wt%). Styrene content refers to the wt% of bound styrene in a polymer and can be determined by Fourier Transform infrared spectroscopy. In another aspect, the polydiene consists of or consists essentially of the solution polymerized styrene-butadiene rubber. In another aspect, the polydiene can comprise the solution polymerized styrene-butadiene rubber from 25 phr, 30 phr, 35 phr, 40 phr, 45 phr, 50 phr, 55 phr, 60 phr, 65 phr, 70 phr, 75 phr, 80 phr, 85 phr, 90 phr, 95 phr, or 100 phr, where any value can be a lower and upper endpoint of a range (e.g., 55 phr to 90 phr).

In another aspect, the polydiene can comprise polybutadiene rubber having a cis-1,4-butadiene content of greater than or equal to 90%, greater than 93%, greater than 95%, or greater than 97%. In another aspect, the polydiene can comprise polybutadiene rubber having a cis-1,4-butadiene content of 90%, 92%, 94%, 96%, 98%, 99%, or 100%, where any value can be a lower and upper endpoint of a range (e.g., 90% to 99%). In another aspect, the polydiene can consist of or consist essentially of a polybutadiene rubber. A polybutadiene rubber having a cis-1,4-butadiene content of 90% or greater can be referred to as a high-cis polybutadiene. In another aspect, the polydiene can comprise polybutadiene rubber having a cis-1,4-butadiene content of less than 40%, less than 37%, less than 35%, or less than 32%. In another aspect, the polydiene can comprise polybutadiene rubber having a cis-1,4-butadiene content of 30%, 32%, 34%, 36%, 38%, or 40%, where any value can be a lower and upper endpoint of a range (e.g., 32% to 38%). Cis, trans, and vinyl contents (%) of polymers refer to the molar proportions of the 1,4-cis, 1-4-trans, and 1-2-vinyl butadiene units of the polymer, unless otherwise expressed. These percentages can be determined by solid-state NMR. In another aspect, the polydiene can comprise polybutadiene rubber from 10 phr, 15 phr, 20 phr, 25 phr, 30 phr, 35 phr, 40 phr, 45 phr, 50 phr, 55 phr, 60 phr, 65 phr, 70 phr, 75 phr, 80 phr, 85 phr, 90 phr, 95 phr, or 100 phr where any value can be a lower and upper endpoint of a range (e.g., 10 phr to 75 phr). In a further aspect, the polydiene can comprise a high-cis polybutadiene rubber from 10 phr, 15 phr, 20 phr, 25 phr, 30 phr, 35 phr, 40 phr, or 45 phr, where any value can be a lower and upper endpoint of a range (e.g., 10 phr to 45 phr). In another further aspect, the polydiene can comprise a polybutadiene rubber with a cis-1,4-butadiene content of less than 40% from 50 phr, 55 phr, 60 phr, 65 phr, 70 phr, 75 phr, 80 phr, 85 phr, 90 phr, 95 phr, or 100 phr where any value can be a lower and upper endpoint of a range (e.g., 60 phr to 75 phr).

As disclosed previously, the resin can comprise an ester of a resin acid and a polyhydric alcohol (i.e., the reaction product between the resin acid and the polyhydric alcohol). In one aspect, the composition can comprise at least 30 phr, at least 40 phr, or at least 50 phr of a resin. In another aspect, the composition can comprise 40 phr, 50 phr, 60 phr, 70 phr, 80 phr, or 90 phr of a resin, where any value can be a lower and upper endpoint of a range (e.g., 40 phr to 80 phr). In another aspect, the resin can have a glass transition temperature of 20°C, 30°C, 40°C, 50°C, 60°C, 70°C, or 80°C, where any value can be a lower and upper endpoint of a range (e.g., 20°C to 80°C). In another aspect, the resin can have a softening point of 50°C, 60°C, 70°C, 80°C, 90°C, 100°C, 110°C, 120°C, or 130°C, where any value can be a lower and upper endpoint of a range (e.g., 90°C to 110°C). The softening point of the resin is determined by Kraton Test Method (AQCM) 003, ASTM D465, or an equivalent. In a further aspect, the resin can be significantly bio-based, where the resin comprises from 85%, 90%, 95%, 99%, or 100% bio-based resin, where any value can be a lower and upper endpoint of a range (e.g., 90% to 95%). Using a bio-based resin can allow for production of a more environmentally sustainable rubber composition. The resin can include gum rosins from the oleoresin extrudate of the living pine tree, wood rosins from the oleoresin contained in the aged stumps, tall oil rosins from the waste carboxyl group to the liquor recovered as a byproduct in the Kraft paper industry, derivatives thereof, or combinations thereof.

In one aspect, the resin acid of can include a fused tricyclic compound with at least one carboxylic acid group and at least one double bond. In a further aspect, the resin acid can comprise abietic acid, dehydroabietic acid, levopimaric acid, palustric acid, neoabietic acid, pimaric acid, isopimaric acid, or any combination thereof.

The polyhydric alcohol can be any organic compound possessing two or more hydroxyl groups. In one aspect, the polyhydric alcohol can comprise ethylene glycol, propylene glycol, diethylene glycol, triethylene glycol, tetraethylene glycol, trimethylene glycol, pentaerythritol, dipentaerythritol, tripentaerythritol, trimethylolethane, trimethylolpropane, mannitol, sorbitol, or any combination thereof.

In another aspect, the resin can further comprise an ester of a fatty acid and a polyhydric alcohol (i.e., the reaction product between the fatty acid and the polyhydric alcohol). In one aspect, the fatty acid can comprise palmitic acid, stearic acid, behenic acid, or any combination thereof. In another aspect, the resin comprises (1) an ester of pentaerythritol and dehydroabietic acid and levopimaric acid and (2) an ester of pentaerythritol and palmitic acid, stearic acid, and behenic acid.

The compositions described herein can include one or more optional resins. In one aspect, the optional resins can include aromatic or nonaromatic hydrocarbon resins. The hydrocarbon resins can also have various degrees of unsaturation or be fully saturated. In one aspect, the resins can be derived from C5 alkenes and/or C9 alkenes. In one aspect, the composition comprises a C5 aliphatic resin, a C9 aromatic resin, dicyclopentadiene (DCPD), a hydrogenated dicyclopentadiene (HDCPD), a copolymer thereof (e.g., a copolymer of DCPD and a C9 aromatic resin (CDPC/C9) or a copolymer of HCPD and a C9 aromatic resin (HDCPD/C9)), or any combination thereof. In one aspect, the hydrocarbon resin can be functionalized and/or partially hydrogenated. The hydrocarbon resin, such as a C5/C9 resin, (e.g., DCPD/C9 or HDCPD/C9 resin) can have an aromatic hydrogen content, as determined by ¹H NMR, of 5 mol%, 10 mol%, 15 mol%, 20 mol%, or 25 mol%, with the balance being aliphatic hydrogen content, where any value can be a lower and upper endpoint of a range (e.g., 5 mol% to 15 mol%). In another aspect, the hydrocarbon resin can have a softening point of 80°C, 90°C, 100°C, 110°C, or 120°C, as determined by ASTM E28 (ring and ball softening point), where any value can be a lower and upper endpoint of a range (e.g., 90°C to 110°C). In another aspect, the composition does not include dicyclopentadiene or a hydrogenated dicyclopentadiene.

The coupling agent can be 5 phr, 10 phr, 15 phr, or 20 phr of the composition, where any value can be a lower and upper endpoint of a range (e.g., 5 phr to 20 phr). The blocked mercapto silane is a silane compound possessing at least one blocked thiol group (i.e., the hydrogen atom of the thiol group (-SH) has been replaced with an organic group). Examples of blocked mercapto silanes include, but are not limited to, an alkoxysilylalkylthio compound or an alkylalkoxysilylalkylthio compound blocked with an acetate group, a phosphonate group, a phosphinate group, a sulfate group, a sulfonate group, an alkanoate group, a palmitate group, a benzoate group, and mixtures thereof. In one aspect, the coupling agent comprises 3-octanoylthio-1-propyltriethoxy silane, 3-octanoylthiopropyl-1-trimethoxysilane, or a combination thereof. The composition can comprise additional organosilane coupling agents, such as mercapto silanes, other blocked mercapto silanes, trialkoxymercaptoalkyl silanes, derivatives thereof, or combinations thereof. Mercapto silanes can include compounds such as 3-mercaptopropyl trialkoxy silanes, 3-mercaptopropyl dialkoxy(alkoxy) silanes, 3-mercaptoethyl trialkoxy silanes, or 3-mercaptoethyl dialkoxy(alkoxy) silanes, where the alkoxy groups can be a C1-C5 or C1-C3 alkoxy.

In one aspect, one or more of the coupling agent(s) can be added to the rubber composition in the form of a pre-treated silica. The pre-treated silica can be one that has been pre-surface treated with an organosilane prior to being added to the rubber composition. The use of a pre-treated silica can allow for two ingredients (i.e., silica and a silica coupling agent) to be added as one ingredient, which may make rubber compounding easier and may also reduce the amount of organosilane coupling agent needed. In another embodiment, the coupling agent(s) is/are separately added to the rubber composition.

The composition can further comprise a filler, a fatty acid, a wax, a liquid plasticizer, an antidegradant, or any combination thereof. The filler can comprise carbon black, a silica, or a combination thereof. In a further aspect, the composition can comprise from 50 phr, 100 phr, 150 phr, or 200 phr of the silica, where any value can be a lower and upper endpoint of a range (e.g., 50 phr to 200 phr). In another further aspect, the composition can comprise from 1 phr, 2 phr, 3 phr, 4 phr, or 5 phr of carbon black, where any value can be a lower and upper endpoint of a range (e.g., 1 phr to 5 phr). Fatty acids can be included in amounts of, for example, 0.5 phr to 3 phr. Examples of fatty acids include, but are not limited to, stearic acid, palmitic acids, oleic acid, and mixtures thereof. In another aspect, waxes can be included in amounts of 1 phr to 5 phr. Examples of waxes include microcrystalline waxes, paraffin waxes, and isoparaffin waxes.

Liquid plasticizers can include both an extending oil present in the elastomers and a process oil added during compounding. Liquid plasticizers can be included in the composition in amounts of 0.5 phr to 10 phr. Suitable processing oils include, but are not limited to, various oils as are known in the art, including aromatic, paraffinic, naphthenic, vegetable oils, and low PCA oils, such as MES, TDAE, SRAE, and heavy naphthenic oils. Suitable vegetable oils include, for example, soybean oil, sunflower oil, and canola oil which are in the form of esters containing a certain degree of unsaturation. Antidegradants can be included in the composition in amounts of 0.1 phr to 5 phr. Antidegradants can include antioxidants and antiozonants. Representative antidegradants include, but are not limited to, phenylene diamine compounds (e.g., diphenyl-p-phenylenediamine, N-phenyl-N'-(1,3-dimethylbutyl)-p-phenylenediamine (6PPD), N,N'-dixylene-p-phenylenediamine (DTPD)), hydroquinoline compounds, amine compounds, dithiocarbamate compounds, phenolic compounds, phosphite compounds, toluimidazole compounds, and others, such as those disclosed in The Vanderbilt Rubber Handbook (1978), Pages 344 through 346.

The silica can include precipitated silica. Precipitated silicas can be obtained, for example, by the acidification of a soluble silicate, e.g., sodium silicate. The silica can be characterized by its surface area. One method of measuring the surface area of silica is nitrogen adsorption in accordance with ASTM D1993-18, which is referred to herein as nitrogen surface area. The nitrogen surface area of the silica can range from 110 m²/g to 400 m²/g. The carbon black can include an n-type carbon black. Examples of N-type carbon black include those with ASTM designations N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991, as specified by ASTM D1765-21. These carbon blacks can be characterized as having iodine absorptions, as determined according to ASTM D1510-21, ranging from 9 g/kg to 145 g/kg. These carbon blacks can also be characterized as having a dibutyl phthalate (DBP) absorption number, as determined according to ASTM D2414, ranging from 34 cm³/100 g to 150 cm³/100 g.

In another aspect, the composition can further comprise curing aids (e.g., activators, accelerators, retarders), curing or vulcanizing agents, or a combination thereof. Activators can be included in amounts of 0.1 phr to 10 phr or 1 phr to 5 phr. Activators can include, but are not limited to, magnesium oxide, zinc oxide, calcium oxide, and polyethylene glycol. Other examples of cure activators include stearic acid, palmitic acid, lauric acid, zinc salts of each of the foregoing, and thiourea compounds such as thiourea and dihydrocarbylthioureas (e.g., dialkylthioureas and diarylthioureas). Accelerators and retarders can be individually included in amounts of 0.1 phr to 10 phr. Accelerators can include, but are not limited to, sulfenamide compounds (e.g., N-cyclohexyl-2-benzothiazolesulfenamide and N-tertbutyl-2-benzothiazolesulfenamide), guanidine compounds (e.g., diphenylguanidine, N,N'-diphenyl guanidine), dithiocarbamate compounds, thiadiazol compounds, thiazole compounds, thiourea compounds, thiuram compound, and xanthate compounds. Retarders can include, but are not limited to, phthalic anhydrides, phthalimides (e.g., N-(cyclohexylthio)phthalimide), sulfenamide compounds, and acids (e.g., benzoic acid and salicylic acid). Vulcanizing agents can be included in amounts of 0.1 phr to 8.0 phr or 0.1 phr to 5.0 phr. The curing or vulcanizing agents can include, but are not limited to, elemental sulfur, insoluble polymeric sulfur, soluble sulfur, and sulfur donating vulcanizing agents (for example, an amine disulfide, polymeric polysulfide, sulfur olefin adduct), and combinations thereof.

### C. PREPARATION AND APPLICATIONS OF RUBBER COMPOSITIONS

Rubber compositions can be compounded by methods generally known in the rubber compounding art. In one aspect, methods for compounding rubber can include mixing a polydiene, a coupling agent, and a resin together with, optionally, various vulcanizable constituent rubbers and with, optionally, various commonly used additive materials such as: fillers, fatty acids, waxes, liquid plasticizers, antidegradants, curing aids, and curing or vulcanizing agents, as disclosed and described herein. In one aspect, the components can be combined in two or more mixing steps.

This invention also provides for articles that incorporate any of the vulcanized rubber compositions disclosed herein or are produced by any of the methods disclosed herein. In one aspect, the article comprises a tire, such as a pneumatic tire, or a component of a tire. The tire can be a race tire, passenger tire, aircraft tire, agricultural tire, off-the-road tire, truck or bus tire, or the like. The tire can also be a radial or bias. The component of the tire can be a tread, base, sidewall, apex, chafer, sidewall insert, overlay, wirecoat, innerliner, or a combination thereof. Such tires can be built, shaped, molded, and cured by various methods which are known and will be readily apparent to those having skill in such art.

When used to form a tire or component of a tire, such as tire tread of a pneumatic tire, the rubber composition disclosed herein can provide a balanced combination of wet traction performance, rolling resistance, and snow and/or ice performance, as determined by various indicators for these characteristics.

Further discussion of these indicators can be found in the Examples. Wet traction is a tire's ability to stop on wet surfaces, such as pavement. Rolling resistance is the energy that a vehicle needs to send to the tires to maintain movement at a consistent speed over a surface and thus can impact the fuel efficiency of the vehicle. Snow and/or ice performance relates to the tire's ability to stop on snow and icy surfaces, such as pavement. In one aspect, the disclosed compositions can produce tires, and/or components of tires, where the tires exhibit better snow performance, comparable wet traction performance, and comparable rolling resistance compared to an equivalent tire that does not comprise the disclosed resin and/or comprises a resin with no bio-based content (e.g., a C5 aliphatic resin, a C9 aromatic resin, DCPD, HDCPD, a copolymer thereof, or any combination thereof) in place of the disclosed resin. In another aspect, the disclosed compositions comprising a polydiene including both a polybutadiene rubber and SSBR can produce tires, and/or components of tires, where the tires exhibit better snow performance and comparable rolling resistance compared to an equivalent tire that does not comprise a polybutadiene rubber.

In one aspect, rubber compositions can be prepared by mixing the vulcanizable elastomers, filler (e.g., silica), and other rubber compounding ingredients, not including the curing agent, in at least one sequential mixing stage with at least one mechanical mixer, usually referred to as a "non-productive" mixing stage, or stage(s), to an elevated temperature under high shear rubber mixing conditions, followed by a final "productive" mixing stage, in which a sulfur-based cure package, including, for example, a sulfur-based curing agent and other curing aids (e.g., accelerators), are added to the mixture and mixed at a lower mixing temperature. The ingredients may be mixed in the non-productive mixing stage(s), for example, for 2 minutes to a temperature of 130°C to 200°C (e.g., 145°C). Once the cure package is added (or at least the curing agent), the subsequent productive mixing step may be conducted at a temperature below the vulcanization (cure) temperature and/or for a short time, in order to avoid unwanted pre-cure of the rubber composition. In one aspect, the productive mixing step can be conducted at a temperature of no more than 120°C, such as at least 40°C or at least 60°C (e.g., for 2 minutes to a temperature of 110 to 115°C). Mixing may be performed, for example, by kneading the ingredients together in a Banbury mixer or on a milled roll. The rubber composition may be cooled to a temperature below 40 °C between each of the mixing stages. For example, the rubber composition may be dumped from the mixer after each mixing step, sheeted out from an open mill or sheeted out by a roller die, and allowed to cool to below 40°C after each mixing step.

When the cure package is thoroughly mixed, the rubber composition may be molded or otherwise formed into the shape of a green component of a tire, such as a tire tread. The temperature of the green component may be raised to effect cure. Curing of the pneumatic tire or a part/component thereof may be carried out at a temperature of from 120°C to 200°C (e.g., at least 140°C, no more than 180°C, or 150°C) for at least 10 minutes. Any of the usual vulcanization processes may be used, such as heating in a press or mold, or heating with superheated steam or hot air.

### D. EMBODIMENTS

The following listing of exemplary embodiments supports and is supported by the disclosure provided herein.

Embodiment 1. A vulcanizable composition, comprising: a polydiene in the amount of 75 phr to 100 phr, wherein the polydiene comprises one or more elastomers, and wherein at least one elastomer has a glass transition temperature of from -95°C to -75°C; at least 5 phr of a coupling agent comprising a blocked mercapto silane; and at least 30 phr of a resin, where the resin comprises an ester of resin acid and a polyhydric alcohol.

Embodiment 2. The vulcanizable composition of embodiment 1, wherein the resin acid comprises a fused tricyclic compound with at least one carboxylic acid group and at least one double bond.

Embodiment 3. The vulcanizable composition of embodiment 1 or 2, wherein the resin acid comprises abietic acid, dehydroabietic acid, levopimaric acid, palustric acid, neoabietic acid, pimaric acid, isopimaric acid, or any combination thereof.

Embodiment 4. The vulcanizable composition of any one of embodiments 1-3, wherein the resin further comprises an ester of a fatty acid ester of a polyhydric alcohol.

Embodiment 5. The vulcanizable composition of embodiment 4, wherein the fatty acid comprises palmitic acid, stearic acid, behenic acid, or any combination thereof.

Embodiment 6. The vulcanizable composition of any one of embodiments 1-5, wherein the polyhydric alcohol comprises ethylene glycol, propylene glycol, diethylene glycol, triethylene glycol, tetraethylene glycol, trimethylene glycol, pentaerythritol, dipentaerythritol, tripentaerythritol, trimethylolethane, trimethylolpropane, mannitol, sorbitol, or any combination thereof.

Embodiment 7. The vulcanizable composition of embodiment 1, wherein the resin comprises (1) an ester of pentaerythritol and dehydroabietic acid and levopimaric acid and (2) an ester of pentaerythritol and palmitic acid, stearic acid, and behenic acid.

Embodiment 8. The vulcanizable composition of any one of embodiments 1-7, wherein the resin has a glass transition temperature of from 20°C to 80°C.

Embodiment 9. The vulcanizable composition of any one of embodiments 1-8, wherein the polydiene comprises polybutadiene rubber, a solution polymerized styrene-butadiene rubber, or a combination thereof.

Embodiment 10. The vulcanizable composition of any one of embodiments 1-8, wherein the polydiene comprises the solution polymerized styrene-butadiene rubber having from 2 wt% to 10 wt% residues of styrene.

Embodiment 11. The vulcanizable composition of any one of embodiments 1-10, wherein the polydiene comprises a polybutadiene rubber having a cis-1,4-butadiene content of less than 40%.

Embodiment 12. The vulcanizable composition of any one of embodiments 1-10, wherein the polydiene comprises a polybutadiene rubber having a cis-1,4-butadiene content of 30% to 40%.

Embodiment 13. The vulcanizable composition of any one of embodiments 1-10, wherein the polydiene comprises a polybutadiene rubber having a cis-1,4-butadiene content of greater than or equal to 90%.

Embodiment 14. The vulcanizable composition of any one of embodiments 1-10, wherein the polydiene comprises a polybutadiene rubber having a cis-1,4-butadiene content of 90% to 99%.

Embodiment 15. The vulcanizable composition of any one of embodiments 1-14, wherein the polydiene comprises the polybutadiene rubber from 10 phr to 75 phr and the solution polymerized styrene-butadiene rubber from 25 phr to 90 phr.

Embodiment 16. The vulcanizable composition of any one of embodiments 1-15, wherein at least one elastomer is functionalized with at least one functional group selected from an aminosilane group, a thiol, a hydroxy, an ethoxy group, an epoxy group, an amino group, a carboxyl group, a phthalocyanine group, and a silane-sulfide group.

Embodiment 17. The vulcanizable composition of any one of embodiments 1-15, wherein the solution polymerized styrene-butadiene rubber is functionalized with at least one functional group selected from an aminosilane group, a thiol, a hydroxy, an ethoxy group, an epoxy group, an amino group, a carboxyl group, a phthalocyanine group, and a silane-sulfide group.

Embodiment 18. The vulcanizable composition of any one of embodiments 1-17, wherein at least one elastomer is functionalized with at least one functional group selected from a hydroxy, a thiol, an amino group, an alkoxy group, an alkoxyamine group, a silane, an alkoxysilane, and an alkoxyaminosilane.

Embodiment 19. The vulcanizable composition of any one of embodiments 1-17, wherein the polybutadiene rubber is functionalized with at least one functional group selected from a hydroxy, a thiol, an amino group, an alkoxy group, an alkoxyamine group, a silane, an alkoxysilane, and an alkoxyaminosilane.

Embodiment 20. The vulcanizable composition of any one of embodiments 1-19, wherein the coupling agent comprises 3-octanoylthio-1-propyltriethoxy silane, 3-octanoylthiopropyl-1-trimethoxysilane, or a combination thereof.

Embodiment 21. The vulcanizable composition of any one of embodiments 1-20, wherein the coupling agent is from 5 phr to 20 phr and wherein the resin is from 40 phr to 80 phr.

Embodiment 22. The vulcanizable composition of any one of embodiments 1-21, wherein the composition further comprises a C5 aliphatic resin, a C9 aromatic resin, dicyclopentadiene, a hydrogenated dicyclopentadiene, a copolymer thereof, or any combination thereof.

Embodiment 23. The vulcanizable composition of any one of embodiments 1-21, wherein the composition does not include dicyclopentadiene or a hydrogenated dicyclopentadiene.

Embodiment 24. The vulcanizable composition of any one of embodiments 1-23, wherein the composition further comprises a filler, a fatty acid, a wax, a liquid plasticizer, an antidegradant, or any combination thereof.

Embodiment 25. The vulcanizable composition of embodiment 24, wherein the filler comprises carbon black, a silica, or a combination thereof.

Embodiment 26. The vulcanizable composition of any one of embodiments 1-25, wherein the composition comprises from 50 phr to 200 phr of the silica.

Embodiment 27. The vulcanizable composition of any one of embodiments 1-26, wherein the composition comprises from 1 phr to 5 phr of carbon black.

Embodiment 28. A vulcanized composition comprising the vulcanizable composition of any one of embodiments 1-27, wherein the vulcanizable composition has been cured.

Embodiment 29. An article comprising the vulcanized composition of embodiment 28.

Embodiment 30. The article of embodiment 29, wherein the article comprises a tire or a component of a tire.

Embodiment 31. The article of embodiment 30, wherein the component of the tire comprises a tread, base, sidewall, apex, wirecoat, ply coat, shoulder wedge, chafer, or any combination thereof.

Embodiment 32. The article of embodiment 30, wherein the component of the tire comprises a tread.

From the foregoing, it will be seen that embodiments herein are well adapted to attain all the ends and objects hereinabove set forth together with other advantages which are obvious and which are inherent to the structure. While specific elements and steps are discussed in connection to one another, it is understood that any element and/or steps provided herein is contemplated as being combinable with any other elements and/or steps regardless of explicit provision of the same while still being within the scope provided herein.

Now having described the embodiments of the present invention, in general, the following Examples describe some additional embodiments of the present invention. While embodiments of the present invention are described in connection with the following examples and the corresponding text, there is no intent to limit embodiments of the present invention to this description. On the contrary, the intent is to cover all alternatives, modifications, and equivalents included within the spirit and scope of the present invention.

### E. EXAMPLES

The following examples are put forth so as to provide those of ordinary skill in the art with a complete disclosure and description of how the compounds, compositions, articles, devices and/or methods claimed herein are made and evaluated and are intended to be purely exemplary of the invention and are not intended to limit the scope of what the inventors regard as their invention. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric.

### EVALUATION OF RUBBER COMPOSITIONS

Four rubber compositions comprising an SSBR-based matrix are provided in Table 1. Notable differences between the compositions include whether polybutadiene is included in the mixture and what type of traction resin is used. The control compositions (C1, C2, and C3) use HDCPD as the traction resin, while the compositions as described herein (I1, I2, and I3) use a bio-based traction resin. C1 is the control composition for I1, C2 is the control composition for I2, and C3 is the control composition for I3. All control and inventive compositions comprise the same and equal amounts of wax, antidegradants, aids and curatives (not shown).

Briefly, the rubber compositions are prepared as follows: In a first non-productive step (NP1), the ingredients labeled as used in mixing step NP1 (see Table 1) are combined in a lab-scale mixer and mixed until a temperature of 160°C is achieved. The mixing continues at this temperature for 1-2 minutes. The mixture is then dropped from the mixer and allowed to cool. Thereafter, in a productive mixing step (PR), the remaining ingredients (labeled with PR in Table 1) are added and the mixing continues until the temperature reaches 115°C. The vulcanizable composition is then cured at 170°C and formed into strips suitable for testing.

**Table 1. Rubber composition with amounts of each component shown in phr.**

| **Ingredient** | **Mixing Step** | **C1** | **C2** | **C3** | **I1** | **I2** | **I3** |
|---|---|---|---|---|---|---|---|
| Polybutadiene¹ | NP1 | 22 | 0 | 0 | 22 | 0 | 0 |
| Polybutadiene² | NP1 | 0 | 0 | 73 | 0 | 0 | 73 |
| SSBR³ | NP1 | 81.12 | 104 | 28.08 | 81.12 | 104 | 28.08 |
| Silica⁴ | NP1 | 150 | 150 | 150 | 150 | 150 | 150 |
| Coupling Agent⁵ | NP1 | 12 | 12 | 12 | 12 | 12 | 12 |
| Liquid Plasticizer⁶ | NP1 | 6 | 6 | 7 | 6 | 6 | 7 |
| Processing Aid | NP1 | 3 | 3 | 3 | 3 | 3 | 3 |
| Traction Resin⁷ | NP1 | 66 | 66 | 67 | 0 | 0 | 0 |
| Gum rosin⁸ | NP1 | 3 | 3 | 3 | 3 | 3 | 3 |
| Bio-based | NP1 | 0 | 0 | 0 | 66 | 66 | 67 |
| Traction Resin⁹ | | | | | | | |
| Accelerator¹⁰ | PR | 6.5 | 6.5 | 6.0 | 6.7 | 6.7 | 6.5 |
| Specific Gravity | N/A | 1.25 | 1.25 | 1.25 | 1.25 | 1.25 | 1.25 |

| | | | | | | | |
|---|---|---|---|---|---|---|---|
| ¹ Solution polymerized, high cis-1,4 polybutadiene stabilized with a non-staining antioxidant; produced using a stereospecific neodymium catalyst which controls molecular weight distribution and provides a highly linear polymer; Mooney viscosity (ML1+4 at 100°C) of 55; T_{g} of -106°C; onset T_{g} of -110°C; cis-1,4 butadiene content, 96-97 wt.%; volatiles, 0.5 wt.% maximum; specific gravity 0.91; obtained as BUDENE^{®} 1223, from The Goodyear Tire and Rubber Company. ² Polybutadiene rubber functionalized for the coupling to silica and having a T_{g} of -90.5°C and vinyl content of 14.5% and cis content of 34.5%; obtained as KBR 820 from Kumho. ³ Li-catalyzed, aminosiloxane multi-functionalized, solution polymerized, styrene butadiene rubber; 5 wt.% styrene; 11% 1,2-vinyl; less than 40% cis-1,4 butadiene; given phr includes 3.85 wt.% extender oil; Mooney viscosity (ML1+4 at 100°C) of 90; T_{g} of -85°C; obtained as M0511^{™} from LG Chemicals. ⁴ Precipitated silica having a BET nitrogen surface area of 125 m2/g; a CTAB surface area of 115 m2/g; obtained as Hi-Sil^{™} 315 G-D from PPG. ⁵ 3-Octanoylthio-1-propyltriethoxysilane, obtained as NXT^{™} silane, from Momentive Performance Materials. ⁶ Vegetable oil (sunflower oil). ⁷ Hydrogenated dicyclopentadiene (HDCPD)/C9 resin; 10 wt.% aromatic content; 89 wt.% aliphatic; softening point (ring and ball method), 103°C; T_{g}, 55°C; Mn 480 g/mol; Mw 770 g/mol; obtained as OPPERA^{™} PR 383 from ExxonMobil. ⁸ WW grade Gum Rosin (colophony); softening point (ring and ball method) of 85°C; obtained from A.V. Pound & Co. Ltd. ⁹ Sylvatraxx^{™} 2097 from Kraton ¹⁰ Mixture of N-cyclohexyl benzothiazole-2-sulfenamide (CBS) and N,N'-diphenyl guanidine (DPG) | | | | | | | |

After curing, the rubber compositions are formed into appropriately-sized samples (based on the testing methodology used) and subjected to various tests. The tests for the various rheological properties were performed on rubber samples that were cured at 170°C for 10 minutes. Testing results are presented in Table 2. Generally, performance tests show that using a bio-based traction resin in place of HDCPD (I1, I2, and I3) results in significant improvements in snow performance, improvements in wet traction performance, and comparable rolling resistance.

**Table 2. Performance testing of cured rubber compositions.**

| **Property** | **C1** | **C2** | **C3** | **I1** | **I2** | **I3** |
|---|---|---|---|---|---|---|
| Rebound (%) at 0°C | 15.8 | 16.1 | 18.2 | 13.8 | 14.5 | 16.8 |
| RPA Tan δ (10%) at 100°C | 0.142 | 0.151 | 0.140 | 0.138 | 0.147 | 0.137 |
| E' (MPa) at -50°C | 406 | 583 | 349 | 318 | 417 | 276 |

Rebound was determined using a Zwick Roell 5109 rebound resilience tester in accordance with DIN 53512 or ASTM D1054. Rebound at 0°C can be used as an indicator of wet traction performance, where lower values indicate better wet traction. All of I1, I2, and I3 exhibited better wet traction performance compared to their corresponding control compositions.

Tan δ of Table 2 is measured at a strain amplitude of 10% at a temperature of 100°C. A rubber process analyzer (RPA2000 from Alpha Technologies) was used to determine Tan δ. Tan δ can be used as an indicator of rolling resistance, where lower values typically correspond to a better (i.e., lower) rolling resistance. All of I1, I2, and I3 exhibit similar rolling resistances compared to their corresponding control compositions.

Eplexor (E') is determined by means of a GABO Eplexor tester. The test specimen is subjected to 0.25% sinusoidal deformation at 1 Hz and the temperature is varied. The test method is similar to that described in ISO 6721. E' at -50°C can be used as an indicator of snow performance (e.g., traction on snowy and/or icy surfaces), where lower values indicate better snow performance.

All of I1, I2, and I3 exhibited significantly better snow traction performance compared to their corresponding control compositions.

## Claims

1. A vulcanizable composition comprising a polydiene in the amount of from 75 phr to 100 phr, wherein the polydiene comprises one or more elastomers, and wherein at least one elastomer has a glass transition temperature of from -95°C to -75°C as determined in accordance with ASTM D3418-21; at least 5 phr of a coupling agent comprising a blocked mercapto silane; and at least 30 phr of a resin, where the resin comprises an ester of a resin acid and a polyhydric alcohol.

2. The vulcanizable composition of claim 1, wherein the resin acid comprises a fused tricyclic compound with at least one carboxylic acid group and at least one double bond; and/or wherein resin acid comprises abietic acid, dehydroabietic acid, levopimaric acid, palustric acid, neoabietic acid, pimaric acid, isopimaric acid, or any combination thereof.

3. The vulcanizable composition of claim 1 or 2, wherein the resin further comprises an ester of a fatty acid and a polyhydric alcohol, the fatty acid preferably comprising palmitic acid, stearic acid, behenic acid, or any combination thereof.

4. The vulcanizable composition of at least one of the previous claims, wherein the polyhydric alcohol comprises ethylene glycol, propylene glycol, diethylene glycol, triethylene glycol, tetraethylene glycol, trimethylene glycol, pentaerythritol, dipentaerythritol, tripentaerythritol, trimethylolethane, trimethylolpropane, mannitol, sorbitol, or any combination thereof.

5. The vulcanizable composition of at least one of the previous claims, wherein the polydiene comprises a solution polymerized styrene-butadiene rubber having from 2 wt% to 10 wt% residues of styrene.

6. The vulcanizable composition of at least one of the previous claims, wherein the polydiene comprises a polybutadiene rubber having a cis-1,4-butadiene content of less than 40%'; and/or wherein the polydiene comprises a polybutadiene rubber having a cis-1,4-butadiene content of greater than or equal to 90%.

7. The vulcanizable composition of at least one of the previous claims, wherein the polydiene comprises polybutadiene rubber from 10 phr to 75 phr and a solution polymerized styrene-butadiene rubber from 25 phr to 90 phr.

8. The vulcanizable composition of at least one of the previous claims, wherein at least one elastomer is functionalized with at least one functional group selected from an aminosilane group, a thiol, a hydroxy, an ethoxy group, an epoxy group, an amino group, a carboxyl group, a phthalocyanine group, and a silane-sulfide group; and/or wherein at least one elastomer is functionalized with at least one functional group selected from an alkoxy group, an alkoxyamine group, a silane, an alkoxysilane, and an alkoxyaminosilane.

9. The vulcanizable composition of at least one of the previous claims, wherein the resin comprises (1) an ester of pentaerythritol and dehydroabietic acid and levopimaric acid and (2) an ester of pentaerythritol and palmitic acid, stearic acid, and behenic acid.

10. The vulcanizable composition of at least one of the previous claims, wherein the coupling agent comprises 3-octanoylthio-1-propyltriethoxy silane, 3-octanoylthiopropyl-1-trimethoxysilane, or a combination thereof.

11. The vulcanizable composition of at least one of the previous claims, wherein the coupling agent is from 5 phr to 20 phr and/or wherein the resin is from 40 phr to 80 phr.

12. The vulcanizable composition of at least one of the previous claims, wherein the composition further comprises a C5 aliphatic resin, a C9 aromatic resin, dicyclopentadiene, a hydrogenated dicyclopentadiene, a copolymer thereof, or any combination thereof.

13. The vulcanizable composition of at least one of the previous claims, wherein the composition further comprises a filler, a fatty acid, a wax, a liquid plasticizer, an antidegradant, or any combination thereof.

14. A vulcanized composition comprising the vulcanizable composition of at least one of the previous claims, wherein the vulcanizable composition has been cured.

15. An article comprising the vulcanized composition of claim 14, the article preferably being or comprising a tire or a component of a tire.
